# EUROPÄISCHE PATENTSCHRIFT

(11) **EP 3 747 336 B1**
(45) Veröffentlichungstag und Bekanntmachung des Hinweises auf die Patenterteilung: **03.05.2023**
(21) Anmeldenummer: 20174652.6
(22) Anmeldetag: 14.05.2020
(51) Int. Cl.: A47L 15/42, A47L 15/00

(54) **GESCHIRRSPÜLMASCHINE MIT ZUMINDEST EINER WÄRMEPUMPE**
DISHWASHER WITH AT LEAST ONE HEAT PUMP
LAVE-VAISSELLE COMPRENANT AU MOINS UNE POMPE À CHALEUR

(30) Priorität: 03.06.2019 EP 19382459
(43) Veröffentlichungstag der Anmeldung: 09.12.2020
(73) Patentinhaber: BSH Hausgeräte GmbH, 81739 München (DE)
(72) Erfinder: Oblinger, Anton, 86637 Wertingen (DE); Fetzer, Gerhard, 89423 Gundelfingen (DE); Veh, Dominik, 89435 Finningen (DE); Sagües García, Xabier, 31001 Pamplona (ES)

(56) Entgegenhaltungen:
- EP-A1- 3 141 176
- EP-A1- 3 170 438
- EP-A1- 3 335 616
- WO-A1-2019/043532

## Beschreibung

Die vorliegende Erfindung betrifft eine Haushaltsgeschirrspülmaschine mit einem Spülbehälter zur Aufnahme von Geschirr, Gläsern, Bestecken oder ähnlichem Spülgut, und mit zumindest einer Wärmepumpe nach dem Oberbegriff des Anspruchs 1.

Für den Betrieb eines Haushaltsgeräts, etwa einer Geschirrspülmaschine, ist es wichtig, einen möglichst geringen Energie- und Wasserbedarf vorzusehen und somit auch künftige gesetzliche Anforderungen erfüllen zu können und auch bei der Auszeichnung mit einem Energieverbrauchslabel eine möglichst günstige Einstufung zu erhalten. Es hat sich gezeigt, dass hierfür die Ausstattung eines Haushaltsgeräts mit einer Wärmepumpe einen möglichen Weg bietet. Eine solche Anordnung ist beispielsweise aus der EP 2 215 954 B1 bekannt. Es ist dabei von großer Bedeutung, durch den Einsatz einer Wärmepumpe erreichte Vorteile nicht durch einen hierfür benötigten zu hohen Wasserbedarf wieder teilweise aufzuheben.

Die WO 2019/043532 A1 zeigt die Möglichkeit, zwei flache Tanks (äußerer Tankabschnitt, zweiter Tankabschnitt) seitlich des Spülbehälters vorzusehen, die jedoch in für den Wärmepumpeneinsatz üblicher Weise innerhalb eines Spülgangs mehrfach befüllt und entleert werden. Die beiden Tankabschnitte sind dabei derart in Reihe geschaltet, dass eine Befüllung des inneren Tankabschnitts nur über eine Befüllung des äußeren Tankabschnitts und eine Verdrängung der dort gehaltenen Flüssigkeit in den inneren Tank möglich ist. Da im äußeren Tankabschnitt der Verdampfer angeordnet ist und den Tankinhalt während des Betriebs bis in den gefrorenen Zustand abkühlen kann, ist in einer solchen Phase ein Verdrängen der Flüssigkeit aus dem äußeren Tankabschnitt und eine Weiterleitung in den inneren Tankabschnitt nicht möglich.

Die EP 3 141 176 A1 zeigt eine Geschirrspülmaschine, die einen einzigen, einteiligen und zusammenhängenden Frischwassertank aufweist, der je nach Ventilstellung sowohl mit einem äußeren Wasserhahn (zur Befüllung des Frischwassertanks) als auch mit dem Spülbehälter (ausschließlich zur Entleerung des Frischwassertanks) in Verbindung steht. Dabei ist ein Management zur Befüllung und Entleerung einzelner Tankabschnitte vollständig entbehrlich.

Der Erfindung liegt daher das Problem zugrunde, eine Wärmepumpe eines Haushaltsgeräts möglichst wassereffizient nutzen zu können.

Die Erfindung löst das Problem durch einen Gegenstand mit den Merkmalen des Anspruchs 1. Hinsichtlich vorteilhafter Ausgestaltungen und Weiterbildungen der Erfindung wird auf die Ansprüche 2 bis 20 verwiesen.

Dadurch, dass erfindungsgemäß die Haushaltsgeschirrspülmaschine mit zumindest einem inneren Tank versehen ist, der entweder bei Befüllung mit Flüssigkeit als Wärmekoppler des äußeren Tanks zum Spülbehälter hin oder bei Befüllung mit Luft als thermischer Isolator zum Spülbehälter hin verwendbar ist und dass ein erstes Einlaufventil zum gemeinsamen Befüllen von ein oder zwei äußeren Tanks und ein Auslaufventil zur Leitung einer im zumindest einen inneren Tank enthaltenen Flüssigkeit in den Spülbehälter vorgesehen ist, kann eine effektive, schnelle Befüllung und Entleerung der Tanks in verschiedenen Zu- und Ablaufkonstellationen möglich.

Wenn über das erste Einlaufventil zwei äußere Tanks, die auf beiden Seiten des Spülbehälters angeordnet sind, gleichzeitig befüllbar sind, ist eine maximale Einfachheit für eine Ventilanordnung geschaffen.

Günstig steht zumindest ein äußerer Tank über einen Überlauf mit einem inneren Tank in Verbindung, so daß der zumindest eine innere Tank (auch) über diesen Überlauf befüllbar ist, was zudem für besondere konstruktive Einfachheit sorgt.

Weiter ist erfindungsgemäß ein zweites Einlaufventil zum Befüllen oder Sperren des Zulaufs zu einem inneren Tank vorgesehen. Dann muß dieser innere Tank nicht gemeinsam mit den äußeren befüllt werden, sondern kann insbesondere selektiv und unabhängig von einem oder mehreren äußeren Tanks befüllbar sein.

In dieser Anordnung mit drei Ventilen ist es auch möglich, dass der zumindest eine innere Tank selektiv und unabhängig von einem oder mehreren äußeren Tanks entleerbar ist. Dies erhöht weiter die Flexibilität.

Insbesondere kann auch der zumindest eine innere Tank über einen freien Auslauf von oben befüllbar sein. Dabei kann über den freien Auslauf nach Art einer Dusche eine Mehrzahl von Wasserstrahlen von oben in den zumindest einen inneren Tank einleitbar sein. Dies funktioniert auch dann, wenn ein Tank mit ganz oder teilweise gefrorenem Inhalt befüllt werden soll und ein Einlaufenlassen von unten nicht mehr möglich ist.

Wenn die Wärmepumpe in einem jeweiligen Spülgang während ihres Betriebs sämtliche Flüssigkeit, die zu Beginn ihres Betriebs im zumindest einen äußeren Tank enthalten ist, bis zum Ende des jeweiligen Spülgangs dort behält, ist ein sehr sparsamer Umgang mit der dort gesammelten Flüssigkeit, insbesondere enthärtetem Wasser, gegeben. Das Wasser aus dem oder den äußeren Tanks wird nicht verschwendet, ein Nachfüllen während des Betriebs der Wärmepumpe ist entbehrlich. Zudem ist durch den Verzicht auf zwischenzeitliche Befüll- und Entleervorgänge ein Zeitaufwand für diese vermieden. Der Spülgang kann insgesamt beschleunigt werden.

Auch wenn die Wärmepumpe während eines Spülgangs zumindest zweimal ein- und ausschaltbar ist, kann günstig ab dem ersten Einschalten sämtliche Flüssigkeit, die zu diesem Zeitpunkt im zumindest einen äußeren Tank enthalten ist, bis zum Ende des Spülgangs dort behalten werden, um auch bei mehrmaligem Ein- und Ausschalten bereits vom ersten Einschalten an keinen Wasserverlust mehr aus den äußeren Tanks zu haben.

Sofern besonders vorteilhaft die am Ende des Spülgangs in dem zumindest einen äußeren Tank des Verdampfers enthaltene Flüssigkeit zumindest teilweise in einem nächsten Spülgang als Teil der Spülflotte zu einem Vorspülen des Spülguts nutzbar und in den Spülbehälter einleitbar ist, ist auch über mehrere Spülgänge ein besonderer Wasserspareffekt erreicht. Ein erneutes Befüllen des oder der äußeren Tanks zu Beginn eines Spülgangs ist dann nicht nötig.

Insbesondere kann auch zumindest ein Teil der in den inneren und äußeren Tanks gehaltenen Flüssigkeit für den nächsten Spülgang in der Vorspülphase in den Spülbehälter eingeleitet werden und dort unterstützend zum Spülen wirken.

Wenn zu Beginn des Spülgangs alle Tanks mit Flüssigkeit befüllt sind, die im wesentlichen die Umgebungstemperatur aufweist, ist zusätzlich eine dort eine höhere Temperatur als durch zugeführtes Frischwasser (ca. 15°C) gegeben, damit ist auch die Energiebilanz verbessert.

Vorteilhaft ist die im äußeren wie auch im inneren Tank enthaltene Flüssigkeit zugeführtes Frischwasser nach Durchlauf durch einen Enthärter, so dass einer Verkalkung effektiv vorgebeugt ist.

Günstig wird der Betrieb der Wärmepumpe während eines Aufheizens innerhalb einer Waschphase des Spülgangs gestartet, um damit eine weitere Heizung zu entlasten oder sogar überflüssig zu machen.

Wenn die Tanks außerhalb von einer oder mehreren seitlichen Wandungen des Spülbehälters angeordnet sind, kann ein Befüllen oder Entleeren der inneren Tanks die Wärmeleitung zwischen dem Spülbehälter und dem äußeren Tank sehr effektiv beeinflussen. Zudem sind seitlich hohe und tiefe Räume vorhanden, die lediglich in der Breite auf wenige Zentimeter pro Seite beschränkt sind. Günstig für ein großes Tankvolumen sind daher sowohl einer von der Tür aus linken als auch einer rechten Seitenwand jeweils ein innerer und ein äußerer Tank zugeordnet.

Für einen guten Wärmeübergang kann der Verdampfer rohrförmig im jeweils äußeren Tank angeordnet sein und so einen direkten thermischen Kontakt zu darin gehaltener Flüssigkeit haben. Der äußere und der innere Tank stehen in einem sehr innigen thermischen Kontakt zueinander. Sie können in einem gemeinsamen Gehäuse mit einer dünnen Zwischenwandung angeordnet sein.

Insbesondere sind die Abläufe zu Befüllen und Entleeren der Tanks in einem Steuerprogramm hinterlegt, um einen effektiven Ablauf zu gewährleisten und Fehlbedienungen zu vermeiden.

Energetisch sehr günstig ist die Wärmepumpe in zumindest zwei Phasen eines Spülgangs zur zumindest Unterstützung einer Erwärmung aktiv, wobei die erste Phase eine Erwärmung in einem Waschgang und die zweite Phase etwa eine Erwärmung als Teil eines Klarspül- oder Trocknungsgangs ist.

So kann oder können der oder die innere(n) Tank(s) ein Fassungsvermögen von ca. einem Liter und der oder die äußere(n) Tank(s) ein Fassungsvermögen von ca. vier Litern aufweisen.

Ein besonderer Wasserspareffekt ergibt sich zudem, wenn sämtliches aus dem inneren Tank abgeführtes Wasser in weiterer Nutzung dem Spülbehälter zugeführt wird. Auch dieses Wasser wird dann nicht verschwendet und zu keinem Zeitpunkt einfach abgepumpt.

Weitere Vorteile und Merkmale ergeben sich aus in der Zeichnung dargestellten und nachfolgend beschriebenen Ausführungsbeispielen des Gegenstandes der Erfindung.

In der Zeichnung zeigt:

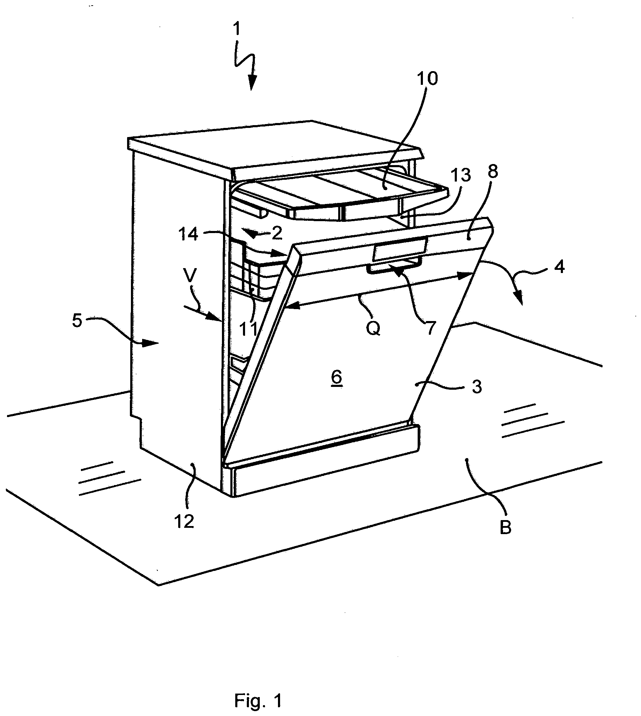

- Fig. 1: eine schematische perspektivische Ansicht von schräg vorne einer Ausführungsform einer Haushaltsgerät, mit einer hier vorderseitigen Tür und einem Spülbehälter im Innern,

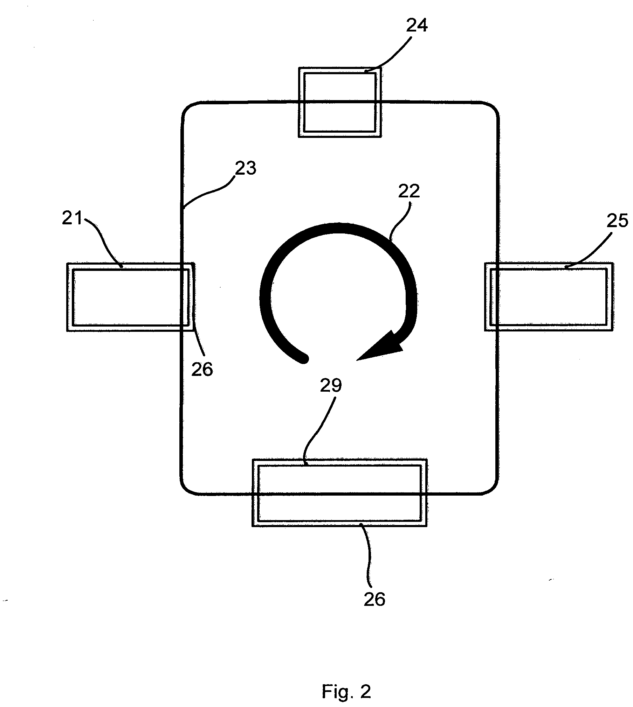

- Fig. 2: eine schematische Ansicht einer von der Geschirrspülmaschine umfassten Wärmepumpe,

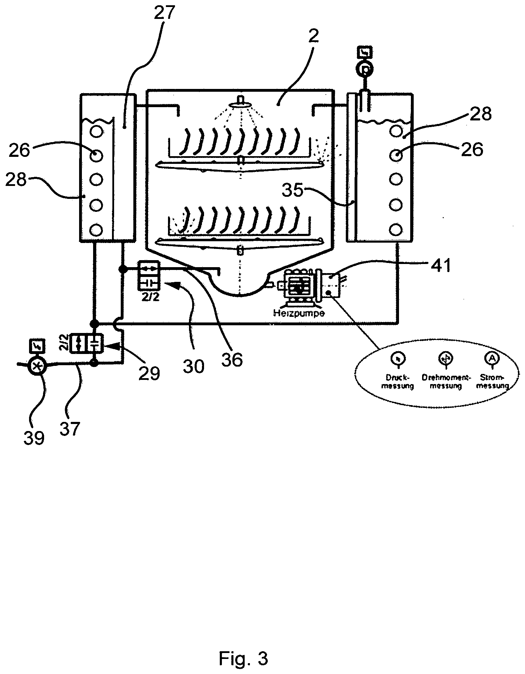

- Fig. 3: eine schematische Ansicht einer Haushaltsgeschirrspülmaschine von vorne bei geöffneter Tür mit beispielhaft einem inneren und einem äußeren Tank links des Spülbehälters und nur einem äußeren Tank auf der rechten Seite, der durch eine Isolationslage vom Spülbehälter abgetrennt ist, hier in einer Anordnung mit zwei Ventilen,

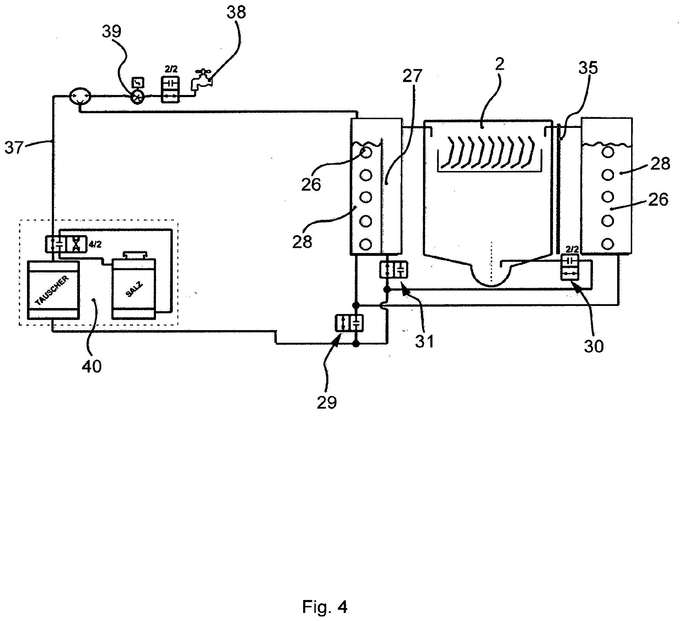

- Fig. 4: eine schematische Ansicht einer Haushaltsgeschirrspülmaschine von vorne bei geöffneter Tür mit beispielhaft einem inneren und einem äußeren Tank links des Spülbehälters und nur einem äußeren Tank auf der rechten Seite, der durch eine Isolationslage vom Spülbehälter abgetrennt ist, hier in einer Anordnung mit drei Ventilen,

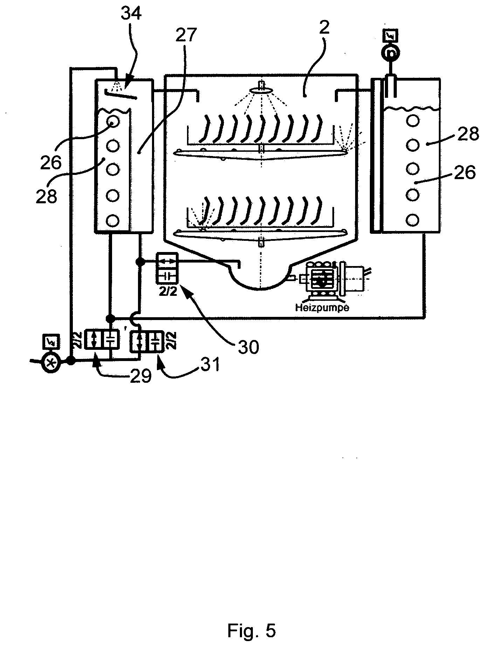

- Fig. 5: eine schematische Ansicht einer Haushaltsgeschirrspülmaschine von vorne bei geöffneter Tür mit beispielhaft einem inneren und einem äußeren Tank links des Spülbehälters und nur einem äußeren Tank auf der rechten Seite, der durch eine Isolationslage vom Spülbehälter abgetrennt ist, hier in einer Anordnung mit drei Ventilen und einem freien, von oben einfördernden Auslauf,

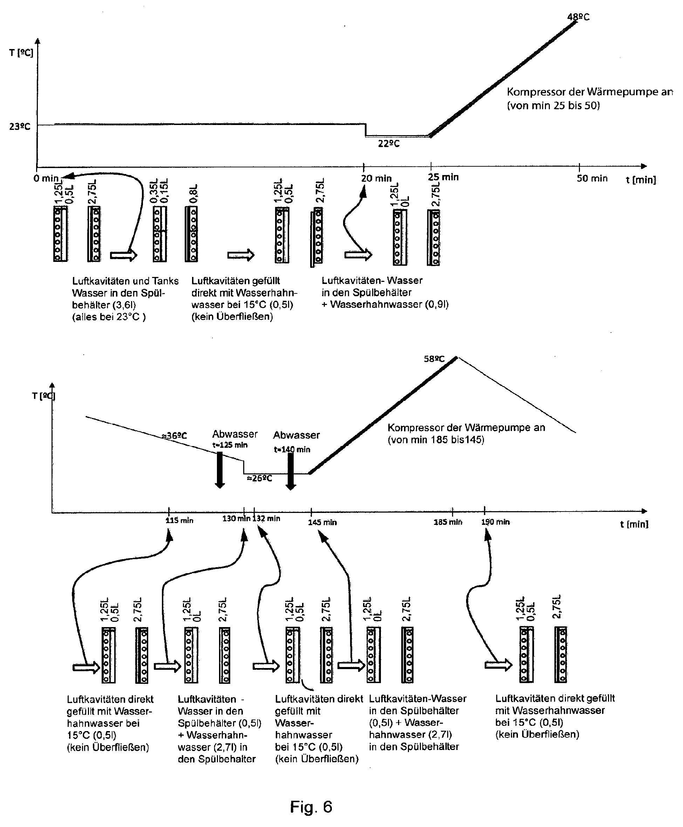

- Fig. 6: eine diagrammatische Darstellung eines beispielhaften Programmablaufs eines Spülgangs, wobei als x-Achse die Zeit und als y-Achse die Temperatur im Spülbehälter aufgetragen ist und wobei einzelne Programmschritte mit ihrer Einsatzzeit und der Befüllung von Außentanks und Innentank sowie Stellung der Ventile hervorgehoben sind,

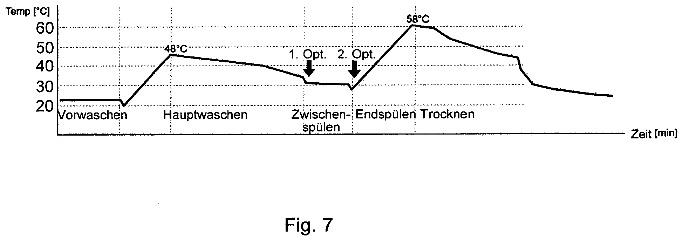

- Fig. 7: einen alternativen Ablauf für eine spezielle Situation mit zwei möglichen Leerungszeitpunkten für die äußeren Tanks in den Spülbehälter.

Das in Figur 1 schematisch dargestellte Haushaltsgerät ist hier eine Geschirrspülmaschine 1, und zwar eine Haushaltsgeschirrspülmaschine. Auch andere Haushaltsgeräte 1 mit zumindest einer Wärmepumpe 20 kommen grundsätzlich für eine erfindungsgemäße Ausbildung in Betracht.

Die im folgenden beschriebene Haushaltsgeschirrspülmaschine 1 nach Figur 1 weist als Bestandteil eines teilweise nach außen offenen oder geschlossenen Gerätekörpers 5 einen Spülbehälter 2 zur Aufnahme von zu bearbeitendem Spülgut wie Geschirr, Töpfen, Bestecken, Gläsern, Kochutensilien u. ä. auf. Das Spülgut kann dabei zum Beispiel in Geschirrkörben 11 und/oder einer Besteckschublade 10 halterbar und dabei von sog. Spülflotte beaufschlagbar sein. Als Spülflotte wird dabei frisches oder insbesondere im Betrieb umlaufendes Wasser mit oder ohne Reinigungsmittel und/oder Klarspülmittel und/oder Trocknungsmittel verstanden. Insbesondere hat die Spülflotte einen lonentauscher zur Enthärtung durchlaufen. Die Spülflotte kann zusätzlich auch mehr oder weniger mit Verschmutzungen aus dem laufenden Betrieb versetzt sein. Der Spülbehälter 2 kann einen zumindest im wesentlichen rechteckigen Grundriss mit einer in Betriebsstellung einem Benutzer zugewandten Vorderseite V aufweisen. Diese Vorderseite V kann dabei einen Teil einer Küchenfront aus nebeneinander stehenden Küchenmöbeln bilden oder bei einem allein stehenden Gerät auch ohne Bezug zu weiteren Möbeln sein.

Der Spülbehälter 2 ist insbesondere an dieser Vorderseite V von einer Tür oder Klappe 3 verschließbar. Diese Tür 3 ist in Figur 1 in teilweise geöffneter und dann schräg zur Vertikalen stehenden Stellung gezeigt. In ihrer Schließstellung steht sie hingegen aufrecht und ist gemäß der Zeichnung zu ihrer Öffnung um eine untere Horizontalachse nach vorne und unten in Richtung des Pfeils 4 aufschwenkbar, so dass sie in vollständig geöffneter Stellung zumindest nahezu horizontal liegt.

An ihrer in Schließstellung vertikalen, dem Benutzer zugewandten Außen- und Vorderseite V kann die Tür 3 mit einer Dekorplatte 6 versehen sein, um damit eine optische und/oder haptische Aufwertung und/oder eine Anpassung an umliegende Küchenmöbel zu erfahren.

Die Geschirrspülmaschine ist hier als allein stehendes oder als sog. teilintegriertes oder auch als voll integriertes Gerät ausgebildet. Im letztgenannten Fall kann der Gerätekörper 5 auch im wesentlichen mit den Außenwandungen des Spülbehälters 2 abschließen. Ein diesen außen umgebendes Gehäuse kann dann entbehrlich sein. Im unteren Bereich der Geschirrspülmaschine kann sich ein Sockel 12 zur Aufnahme von insbesondere Funktionselementen, wie etwa auch einer Umwälzpumpe für die Spülflotte, befinden. Diese Umwälzpumpe kann insbesondere auch beheizbar sein, um so die Spülflotte auf die im jeweiligen Programmschritt gewünschte Temperatur zu bringen. Eine externe, von der Umwälzpumpe unabhängige Heizung kann zusätzlich oder alternativ vorgesehen sein.

Der beweglichen Tür 3 ist im Ausführungsbeispiel gemäß der Zeichnung in ihrem oberen Bereich eine in Querrichtung Q der Geschirrspülmaschine erstreckte Bedienblende 8 zugeordnet, die eine von der Vorderseite V zugängliche Eingriffsöffnung 7 zum manuellen Öffnen und/oder Schließen der Tür 3 umfassen kann. In Querrichtung Q hat die Geschirrspülmaschine häufig eine Erstreckung von 45, 50 oder 60 Zentimetern. In Tiefenrichtung von der Vorderseite V nach hinten liegt die Erstreckung häufig ebenfalls bei etwa 60 Zentimetern. Die Werte sind nicht zwingend.

Der Spülbehälter 2 ist umlaufend von insgesamt bei geschlossener Tür oder Klappe 3 drei festen vertikalen Wandungen 13 sowie zwei horizontalen Wandungen 13 begrenzt, von denen eine eine Decke (oben) und eine weitere einen Boden (unten) des Spülbehälters 2 bildet. Die zur Vorderseite, zu einem vor der Geschirrspülmaschine 1 stehenden Benutzer hin angeordnete und hier bewegliche Wandung 14 bildet dabei einen inneren Bestandteil der beweglichen Tür oder Klappe 3 aus. An die Vorderseite V grenzen in Querrichtung Q nach links hin eine linke aufrechte Seitenwand 13 und nach rechts hin eine rechte aufrechte Seitenwand 13 an.

Die den Boden des Spülbehälters 2 bildende und diesen im wesentlichen nach unten hin begrenzende Wandung 13 liegt ungefähr horizontal, also parallel zu einem äußeren Boden B, auf dem die Geschirrspülmaschine 1 steht.

Das Haushaltsgerät 1 ist weiter mit zumindest einer Wärmepumpe 20 versehen, deren Bestandteile an unterschiedlichen Stellen im Haushaltsgerät 1 - auch verteilt - angeordnet sein können.

Die Wärmepumpe 20 umfasst einen Kompressor (auch Verdichter genannt) 21, in dem am umlaufenden Wärmepumpenmedium 23 Arbeit geleistet wird, so dass dieses Medium 23 erhitzt wird.

In Fließrichtung 22 des Wärmepumpenmediums 23 folgt auf den Kompressor 21 ein Kondensator oder Verflüssiger 24. In diesem kondensiert während des Betriebs der Wärmepumpe 20 das Medium 23 vom gasförmigen in den flüssigen Zustand und gibt durch diesen Phasenwechsel Wärme an die dort herrschende Umgebung ab, also insbesondere an die o. g. Spülflotte und/oder die Luft im Spülbehälter 2. Der Kondensator 24 wirkt damit auch als ein Wärmetauscher. Hierdurch entsteht eine Aufheizung der Spülflotte und/oder Luft im Spülbehälter 2, so dass eine zusätzliche elektrische Heizung kleiner ausgebildet sein und kürzer laufen kann als ohne die Wärmepumpe 20. Je nach Ausbildung kann auch eine zusätzliche elektrische Heizung ganz verzichtbar sein. In jedem Fall ergibt sich hier beim gewünschten Aufheizen von Spülflotte und/oder Luft im Spülbehälter 2 eine große energetische Unterstützung durch die zumindest eine Wärmepumpe 20.

Auf den Kondensator 24 folgt in Fließrichtung 22 eine Drossel oder ähnliche Entspannungseinrichtung 25, an die in Fließrichtung 22 ein Verdampfer 26 anschließt, in dem das zuvor flüssige Medium 23 wieder gasförmig wird. Dabei wird der dortigen Umgebung (zum Beispiel der Küchenluft und/oder einem Latentwärmespeicher) Wärme entzogen, so dass in dieser Umgebung eine Abkühlung stattfindet. Auch der Verdampfer 26 bildet damit einen Wärmetauscher aus, jedoch mit einer anderen Umgebung als der Kondensator 24.

Ab dem Verdampfer 26 ist das Medium 23 wieder gasförmig und kann durch die mechanische Arbeit im dann folgenden Verdichter 21 wieder erhitzt werden, so dass der beschriebene Kreislauf wieder gestartet wird.

Dem Verdampfer 26 sind zumindest zwei im wesentlichen flache Tanks 27, 28 zugeordnet. Diese können direkt aneinander angrenzen und eine breit und hoch erstreckte Ausbildung haben, also jeweils in etwa scheibenförmig sein. Von den zumindest zwei Tanks 27, 28 ist ein innerer 27 mit direktem thermischen Kontakt zum Spülbehälter 2 angeordnet, liegt also beispielsweise vollflächig an einer Außenwandung 13 an und kann auch mit dieser verklebt sein, wie hier in Figur 3 an der linken Seitenwand 13 zu sehen ist. Je nach Befüllung kann dieser innere Tank 27 entweder bei Befüllung mit Flüssigkeit als Wärmekoppler zum Spülbehälter 2 hin oder bei Befüllung mit Luft als thermischer Isolator zum Spülbehälter 2 hin verwendbar sein. Der innere Tank 27 kann zusätzlich zur Wärmekopplungsfunktion auch als Speicher für im Spülbehälter 2 verwendetes Wasser dienen.

In zumindest einem nach außen hin anschließenden äußeren Tank 28 sind hingegen Teile des Verdampfers 26 angeordnet. Beispielsweise liegen mäandrierende Rohre als Teil des Verdampfers 26 im äußeren Tank 28. Dieser dient somit als Energiespeicher. Zusätzlich kann Wasser aus dem Tank 28 ebenfalls bei dessen Entleerung in den Spülbehälter 2 eingebracht werden und dort als Prozesswasser dienen.

Gemäß der Zeichnung sind hier der von der Vorderseite V linken Seitenwandung 13 ein innerer, dem Spülbehälter 2 zugewandter Tank 27 und ein äußerer Tank 28 zugeordnet. Diese Tanks 27, 28 stehen außerhalb des Spülbehälters 2. Der innere Tank 27 steht in gutem thermischem Kontakt zum Spülbehälter 2. Der linke äußere Tank 28 ist vollflächig über den inneren Tank 27 vom Spülbehälter 2 beabstandet und steht in Querrichtung Q weiter außen. In dieser Ausbildung ist nur der von der Tür 3 aus linken Seitenwand 13 ein solcher Doppeltank 27, 28 zugeordnet.

An der rechten Seitenwand 13 ist hingegen nur ein äußerer Tank 28 vorgesehen, der über eine vliesartige (oder andere) Isolationslage 35 vom Spülbehälter 27 thermisch getrennt ist. Auch andere Anordnungen, zum Beispiel links und rechts symmetrisch, sind möglich, ebenso Tanks ober- und/oder unterhalb des Spülbehälters 2.

Die Wärmepumpe 20 wird, wie unten noch näher beschrieben ist, über einen Teil der Zeit des Spülgangs eingeschaltet. Dabei behält oder behalten der oder die äußeren Tanks 28 in diesem jeweiligen Spülgang während ihres Betriebs sämtliche Flüssigkeit, die zu Beginn ihres Betriebs in diesem bzw. in ihnen enthalten ist, bis zum Ende des Spülgangs dort. Der oder die innere(n) Tank(s) 27 wird oder werden hingegen mehrfach befüllt und entleert.

Hierzu können unterschiedliche Ventilanordnungen dienen, die in den Figuren 3 bis 5 dargestellt sind.

Gemäß der ersten Ausführung nach Figur 3 zeigt die Haushaltsgeschirrspülmaschine 1 ein erstes Einlaufventil 29 zum gemeinsamen Befüllen der hier zwei äußeren Tanks 28 - alternativ wäre auch nur ein äußerer Tank 28 möglich - und ein Auslaufventil 30 zur Leitung einer im zumindest einen inneren Tank 27 enthaltenen Flüssigkeit über eine Auslaufleitung 36 in den Spülbehälter 2 vorgesehen.

Über dieses erste Einlaufventil 29 sind bei seiner Öffnung beide äußere Tanks 28, die auf beiden Seiten des Spülbehälters 2 angeordnet sind, gleichzeitig befüllbar. In der Zuleitung 37 vom Wasserhahn 38 ist hier beispielhaft ein Flügelrad 39 als Durchflußmeßgerät angeordnet. Als weitere Sensoren zur Bestimmung des Flüssigkeitsstandes in den Tanks 27, 28 kommen eine Heizpumpe 41 sowie in den oder allen Tanks 27, 28 angeordnete Level- bzw. Füllstands- Sensoren (hier nicht eingezeichnet) in Betracht. Bezüglich der Heizpumpe 41, die vorzugsweise als eine Umwälzpumpe mit zugeordneter Heizungseinrichtung ausgebildet ist, sind gemäß Figur 3 zusätzlich eine Druckmessung, eine Drehmomentmessung und/oder eine Stromstärkenmessung vorgesehen. Mit Hilfe einer solchen Druckmessung, Drehmomentmessung, und/oder Stromstärkenmessung der Heizpumpe können ggf. zusätzlich oder unabhängig von obigen Level- Sensoren eventuell nötige Nachfüllungen auf indirekte Weose gesteuert werden. Zweckmäßigerweise können die direkten und/oder indirekten Füllstands- Sensoren dazu dienen, dass der Wasserspiegel im jeweiligen äußeren Tank 28 um einen Betrag mit Wasser nachbefüllt wird, der dem Schrumpfungsvolumen von etwa 10% beim Auftauen von Eis zu Wasser im äußeren Tank 28 in etwa entspricht. Denn das Volumen in den Behältern 28 wird beim Gefrieren durch den jeweiligen Wärmepumpenbetrieb um bis zu 10% vergrößert, und läuft in den Spülbehälter oder inneren Tank 27 über. Beim Auftauen sinkt der Wasserspiegel im äußeren Tank 28 um diese bis 10%. Es kann durch Nachfüllen der optimale Füllstand im jeweiligen äußeren Tank 28 wiederhergestellt werden, oder auch belassen werden. Zum anderen können mit Hilfe der ein oder mehreren Level-Sensoren ggf. Toleranzen am Flügelradzähler und/oder Herstellungstoleranzen der Tanks bzw. Behälter (z.B. unterschiedliche Schweißdicken deren Halbschalen) ausgeglichen bzw. kompensiert werden.

In der Zuleitung 37 kann zusätzlich eine Wasserenthärtung 40 vorgesehen sein, die jedoch erst in Figur 4 eingezeichnet ist. Wenn der gewünschte Füllstand in den Tanks 27, 28 erreicht ist, Messung zum Beispiel über eine Druckdose, kann die weitere Wasserzufuhr vom Wasserhahn 38 gestoppt werden.

Über die Kombination der Ventile 29, 30 ergeben sich unterschiedliche Befüll- bzw. Entleerungszustände der Tanks 27, 28:
Wenn das erste Einlaufventil 29 geöffnet und das Auslaufventil 30 geschlossen ist, ist der innere Tank 27 mit den äußeren Tanks 28 verbunden. Alle drei Tanks 27, 28 können dann zum Beispiel gemeinsam befüllt werden, wobei zusätzlich zur direkten Befüllung des inneren Tanks 27 auch eine Befüllung über einen Überlauf vom äußeren Tank 28 möglich ist.

Ist hingegen das Einlaufventil 29 offen und auch das Auslaufventil 30 geöffnet, sind die Tanks 27 und 28 verbunden und können gemeinsam über Auflaufleitung 36 in den Spülbehälter 2 entleert werden.

Ist das Einlaufventil 29 geschlossen und das Auslaufventil 30 geöffnet, wird nur der innere Tank über die Leitung 36 in den Spülbehälter 2 geleert, die äußeren Tanks 28 behalten hingegen ihren Wasserstand.

Wenn die Ventile 29 und 30 beide geschlossen sind, bleibt der Wasserstand in allen Tanks 27, 28 konstant.

Diese Version nach Figur 3 kommt daher innerhalb der Verbindung zwischen dem oder den Tanks 27, 28, der Tankbefüllung und der Tankentleerung mit genau zwei Ventilen 29, 30 aus.

In der Version nach Figur 4 ist hingegen ein zweites Einlaufventil 31 zum Befüllen oder Sperren des Zulaufs zu einem inneren Tank 27 vorgesehen. Damit ist der zumindest eine innere Tank 27 selektiv und unabhängig von einem oder mehreren äußeren Tanks 28 befüllbar und ebenso auch selektiv und unabhängig von einem oder mehreren äußeren Tanks 28 entleerbar.

In diesem Ausführungsbeispiel ergeben sich folgende Kombinationen:
Ventil 29 offen, Ventile 30 und 31 geschlossen: es werden nur die äußeren Tanks 28 befüllt;
Ventil 31 offen, Ventile 29 und 30 geschlossen: es wird nur der innere Tank 27 befüllt. Durch den Überlauf ist auch eine Beaufschlagung des linken äußeren Tanks 28 möglich, etwa zur Regeneration;
Ventile 30 und 31 offen, Ventil 29 geschlossen: es wird nur der innere Tank 27 in den Spülbehälter 2 geleert;
Ventile 29, 30 und 31 offen: es werden alle Tanks 27, 28 entleert;
Ventile 29, 30 und 31 geschlossen: der Wasserstand in den Tanks bleibt konstant. Hierbei wird die Sole aus der Enthärterregeneration direkt in den Spülbehältersumpf geleitet und abgepumpt, ohne die Behälter bzw. Tanks 27, 28 zu kontaminieren.

In einem dritten Ausführungsbeispiel nach Figur 5 ist der zumindest eine innere Tank 27 über einen freien Auslauf 34 von oben befüllbar.

Dieser freie Auslauf 34 kann nach Art einer Dusche von oben eine Mehrzahl von Wasserstrahlen von oben in den zumindest einen inneren Tank 27 und/oder den äußeren Tank 28 einleiten, was zum Beispiel auch möglich ist, wenn sich im äußeren Tank 28 Eis gebildet hat. Damit ist dann auch bei komplettem Durchfrieren eine Regeneration möglich, wenn man den Tank 28 von oben befüllt. Wenn hingegen der innere Tank 27 befüllt wird, kann im äußeren Tank 28 eine Befüllung und Regeneration vermieden werden.

Hier ergeben sich außerhalb des offenen Auslaufs 34 prinzipiell die gleichen Schaltkombinationen der Ventile wie im zweiten Ausführungsbeispiel. Auch hier ist es wieder möglich, Innentank 27 und Außentanks 28 jeweils getrennt voneinander zu befüllen und zu entleeren.

Der Auslauf 34 kann auch als Sicherheitsauslauf gesehen werden. Im Normalfall erfolgt durch die statische Höhe des Auslaufs keine Befüllung, außer dass das Ventil 29 oder 31 geschlossen wäre oder die Behälter 28 und die Auslaufleitung der Behälter 27 wären gefroren.

Bei gefrorener Auslaufleitung des Behälters 27 wird das zuströmende frische Leitungswasser die gefrorene Auslaufleitung schnellstens regenerieren. Trotz Störungen durch Eisbildung kann ein Betrieb der Geschirrspülmaschine durch den Sicherheitsfüllkanal stattfinden.

Während einer Regeneration wird der Spülbehälter 2 direkt aus dem Wasserhahn 38 befüllt, um zu vermeiden, dass Wasser mit Salz in Kontakt gerät mit den Stahlrohren des Verdampfers 26.

Wenn die Temperatur im äußeren Tank 28 (auch als Verdampfertank bezeichnet) kleiner ist als die Wassertemperatur aus dem Wasserhahn 38, wird der Spülbehälter 2 direkt aus dem Wasserhahn 38 befüllt, ohne das Wasser aus dem Verdampfertank 28 zu benutzen.

Wenn das Wasser aus den Verdampfertanks 28 nicht genutzt wird, arbeitet die Wärmepumpe 20 über ihren Zyklus wie ein geschlossener Tank. Es ist auch möglich, daß ein sehr kleiner Teil des Wassers aus den Tanks 28 genutzt wird. Um sicherzustellen, daß noch ein bisschen ungefrorenes Wasser in den äußeren Tanks 28 ist, also nicht der ganze Tank durchgefroren ist, ist eine gute Möglichkeit, den äußeren Tank 28 direkt nach der Waschphase zu leeren, wenn die pre-rinse-Phase beginnt, oder alternativ nach der pre-rinse-Phase, wenn die final-rinse-Phase beginns. Beide Optionen sind im Diagramm nach Figur 7 als 1st Opt 1 und 2nd Opt eingezeichnet. Sie führen dort zu kurzfristigen Temperaturabsenkungen.

Da das Wasser aus den Außentanks 28 in Kontakt mit den Verdampferrohren 26 steht, werden die Materialien sowohl des Tanks 28 (Kunststoff) als auch der Verdampferrohre 26 (Edelstahl) so ausgewählt, dass sie lebensmittelecht sind.

Ein Ablauf eines möglichen Spülgangs ist in Figur 6 dargestellt:
Die Wärmepumpe 20 wird über einen Teil der Zeit des Spülgangs eingeschaltet. Dabei behält oder behalten der oder die äußeren Tanks 28 in diesem jeweiligen Spülgang während ihres Betriebs sämtliche Flüssigkeit, die zu Beginn ihres Betriebs in diesem bzw. in ihnen enthalten ist, bis zum Ende des Spülgangs dort. Die nach dem Einschalten der Wärmepumpe 20 im Tank 28 enthaltene Flüssigkeit wird also weder ohne Nutzung abgeleitet noch dem Spülbehälter 2 als weitere Spülflotte zugeleitet. Dadurch ergibt sich ein besonders effektiver und sparsamer Umgang mit dieser Flüssigkeit, die insbesondere durch einen lonentauscher der Enthärtungseinheit 40 geleitetes und damit enthärtetes Wasser bilden kann.

Insbesondere kann die Wärmepumpe 20 während eines Spülgangs zumindest zweimal ein- und ausschaltbar sein, zum Beispiel während des Aufheizens der Spülflotte in einer Waschphase und während des Erhitzens des Spülbehälters in einer Trocknungsphase. Ab dem ersten Einschalten wird sämtliche Flüssigkeit, die zu diesem Zeitpunkt in dem zumindest einen äußeren Tank 28 enthalten ist, bis zum Ende des Spülgangs dort behalten.

Eine besonders hohe Einsparung von Flüssigkeit ergibt sich dann, wenn die am Ende des Spülgangs in dem zumindest einen äußeren Tank 28 des Verdampfers 26 enthaltene Flüssigkeit zumindest teilweise in einem nächsten Spülgang als Teil der Spülflotte zu einem Vorspülen des Spülguts nutzbar und in den Spülbehälter 2 einleitbar ist. Dies kann beispielsweise dadurch erfolgen, dass in der Vorspülphase die äußeren und inneren Tank(s) 27, 28 einmal bis etwa zur Hälfte geleert werden und der Inhalt als Unterstützung der Spülflotte in den Spülbehälter 2 eingeleitet wird.

Nach diesem genannten Verbrauch von Flüssigkeit aus den Tanks 27, 28 zum Vorspülen des Spülguts wird der zumindest eine äußere Tank 28 während dieses Spülgangs nur noch genau einmal mit Flüssigkeit befüllt. Dann hält er diese Flüssigkeit optimalerweise bis zum Ende des Spülgangs.

Bei der oben genannten Ausbildung, dass die im äußeren 28 wie auch im inneren Tank 27 enthaltene Flüssigkeit zugeführtes Frischwasser nach Durchlauf durch einen Enthärter 40 ist, wird das Wassersparpotential dieser Anordnung deutlich.

Das enthärtete Wasser ist seiner Art nach gleich im inneren und äußeren Tank 27, 28, hat also auch die gleichen physikalischen Eigenschaften.

Die Steuerung ist so eingerichtet, daß zu Beginn des Spülgangs alle Tanks 27, 28 mit Flüssigkeit befüllt sind, die im wesentlichen die Umgebungstemperatur (beispielsweise die Raumtemperatur einer Küche, also über 20°C, typisch ca. 23°C) aufweist. Wie beschrieben, kann dabei zumindest die Befüllung der Tanks 28 noch aus dem vorigen Spülgang stammen. Wenn dann beim Vorspülen nicht nur frisches Wasser aus dem Wasserhahn mit ca. 15°C zugegeben wird, sondern auch wärmeres Wasser aus den Tanks 27, 28, stellt sich eine Mischtemperatur ein, die oberhalb der Frischwassertemperatur liegt. Das Reinigungsergebnis des Vorspülens ist dann verbessert, ohne daß hierzu zusätzliche Energie benötigt wurde.

Insbesondere ist oder sind der oder die äußeren Tanks 28 größer als der oder die inneren Tanks 27. Beispielhafte Füllwerte sind in Figur 6 angegeben.

Wie weiter in Figur 6 deutlich wird, startet der Betrieb der Wärmepumpe 20 erst nach dem Vorspülen, nämlich beispielsweise während eines Aufheizens innerhalb einer Waschphase des Spülgangs, hier also etwa bei der Zeitmarkierung t2.

Im Einzelnen ist ein typischer Programmzyklus eines Spülgangs eines hier als Geschirrspülmaschine 1 ausgebildeten Haushaltsgeräts in Figur 6 dargestellt: Dieser Zyklus umfasst vier Phasen: Vorspülen ("pre-rinse"), waschen ("washing"), spülen ("rinse") und trocknen ("drying").

Die Wärmepumpe 20 kann etwa in zumindest zwei Phasen eines Spülgangs zur Unterstützung einer Erwärmung aktiv sein: Am Beginn der Waschphase ist eine Erhitzung auf eine Temperatur T1 und am Beginn der Trocknungsphase eine weitere Erhitzung auf eine noch höhere Temperatur T2 nötig. Diese Erhitzung kann jeweils mit Unterstützung der Wärmepumpe 20 oder ausschließlich durch diese stattfinden.

Die erste Phase zur Unterstützung einer Erwärmung durch die Wärmepumpe 20 ist damit ein Teil eines Waschgangs, nämlich der Beginn des Waschgangs, des Haushaltsgeräts 1, und zwar die Erwärmung auf die hohe Temperatur T1. Diese liegt gemäß Figur 6 beispielhaft bei 48°C. Die zweite Phase zur Unterstützung einer Erwärmung durch die Wärmepumpe 20 ist ein Teil eines Trocknungsgangs, und zwar die Erwärmung auf die Temperatur T2. Diese liegt gemäß Figur 4 beispielhaft bei 58°C. Zwischen diesen beiden Phasen können einige Minuten bis typisch einige zehn Minuten liegen, in denen die Wärmepumpe 20 selbst nicht in Betrieb ist.

Ein Spülgang läuft hier so ab, daß zunächst bei der Zeitmarke t0 die Tanks 27,28 vollständig mit enthärtetem Frischwasser befüllt sind, das in etwa Umgebungstemperatur (z.B. 23°C) aufweist. Diese Flüssigkeit aus den Tanks 27, 28 wird ganz oder teilweise in den Spülbehälter 2 geleitet, um dort das Vorspülen zu unterstützen. Anschließend werden die Tanks 27,28 vollständig wieder mit enthärtetem Frischwasser aus der Zuleitung befüllt. Bis zum Ende des Vorspülens ab der Zeitmarke t1 werden die inneren Tanks 27 in den Spülbehälter 2 entleert. Zusätzlich wird Wasser aus der Zuleitung - ggf. enthärtet - direkt in den Spülbehälter 2 geleitet, wenn mehr Wasser benötigt wird. Sobald der innere Tank 27 geleert ist, wirkt er als thermische Isolatoren zwischen dem Spülbehälter 2 und den äußeren Tanks 28, weil der innere Tank 27 dann mit Luft befüllt ist. Dadurch kann die Wärmepumpe 20 mit einer gesteigerten Effektivität arbeiten.

Ab der Zeitmarke t2 findet die Waschphase mit einer Erwärmung auf die Temperatur T1 statt.

Ungefähr 15 Minuten bevor die Waschphase endet, werden die inneren Tanks 27 wieder mit frischem Wasser aus der Zuleitung befüllt. Dies begünstigt den Wärmetransfer vom Spülbehälter 2 zu den äußeren Tanks 28. Diese werden dadurch wärmer, als dies mit einer thermischen Abschirmung der Fall wäre. Einer Eisbildung in den äußeren Tanks 28 wird damit entgegengewirkt.

Bei der Zeitmarke t3 beginnt die Zwischenspülphase. Hierfür werden die über eine gewisse Zeit bereits vom Spülbehälter 2 vorerwärmten inneren Tanks 27 wieder in den Spülbehälter 2 entleert. Dadurch wird im Spülbehälter 2 die Temperatur gegenüber unmittelbar einlaufendem Frischwasser erhöht und beträgt hier dann ca. 26 °C. Der Wärmeinhalt des inneren Tanks 27 wird damit noch genutzt und geht nicht verloren, wie dies bei einem Abpumpen des Tankinhalts der Fall wäre.

Bei t4 wird der innere Tank 27 wieder mit enthärtetem Frischwasser befüllt. Damit wird ein Teil der Wärme aus dem Spülbehälter 2 in die äußeren Tanks 28 geleitet und zudem der innere Tank 27 erwärmt. Bevor die Klarspülphase mit dem erneuten Aufheizen auf T2 beginnt, wird der innere (dann erwärmte) Tank 27 dann wieder in den Spülbehälter 2 geleert und als Teilmenge der Spülflüssigkeit verwendet. Durch die Entleerung ist dann wieder eine thermische Isolierung vom Spülbehälter 2 erreicht, so dass die Wärmepumpe 20 (Compressor Heat pump) effektiver arbeiten kann.

Nach dem Klarspülen wird bei t5 der innere Tank 27 wieder befüllt, wobei diese Befüllung dann, wie oben beschrieben, bis zum nächsten Spülgang verbleiben kann, um Energie- und Wasserbedarf zu minimieren. Mit dieser Befüllung wird die Trocknung zudem verbessert, die anliegenden Seitenwände 13 bilden Kondensationsflächen und wärmen gleichzeitig die äußeren Tanks 28 auf.

Ein besonderer Wasserspareffekt ergibt sich zudem, wenn sämtliches aus dem inneren Tank abgeführtes Wasser in weiterer Nutzung dem Spülbehälter 2 zugeführt wird. Auch dieses Wasser wird dann nicht verschwendet und zu keinem Zeitpunkt einfach abgepumpt.

Sämtliche Abläufe zu Befüllen und Entleeren der Tanks 27, 28 können in einem Steuerprogramm hinterlegt sein, um dadurch eine optimierte Anpassung an den Betrieb der Wärmepumpe zu gewährleisten und Fehlbedienungen auszuschließen.

Insgesamt ist daher der Energiebedarf für die Aufheizung der der Spülflotte und der Wasserbedarf für den Betrieb erheblich verringert. Der Grad der Unterstützung durch die Wärmepumpe 20 kann je nach Ausbildung variieren, entsprechend kann eine elektrische Zusatzheizung kleiner dimensioniert werden oder im Idealfall auch ganz entfallen.

Der Hauptvorteil der Erfindung liegt im Einsparen von Energie. Das hier gezeigt hydraulische Design, speziell die Verwendung des Verdampfers als Speichertanks und die Temperaturkontrolle, eröffnen die Möglichkeit, dass das Wasser, das in den Spülbehälter 2 geleitet wird, so warm wie möglich ist, ohne die Wasserressourcen zu belasten. Weiter, das Einfüllen von Wasser in den inneren Tank 27, der auch Luft fassen kann, zwischen dem Behälter 2 und dem Verdampfer verbessert die Trocknungsergebnisse und erwärmt den Verdampfer. Schließlich erlaubt die Level-Kontrolle des Füllstandes in jedem Tank 27, 28 die Kontrolle der Wasservolumina eines jeden Tanks 27, 28.

### Bezugszeichenliste

- 1: Haushaltsgerät,
- 2: Spülbehälter,
- 3: Tür,
- 4: Öffnungsrichtung,
- 5: Gerätekörper,
- 6: Dekorplatte,
- 7: Griffmulde,
- 8: Bedienblende,
- 10: Besteckschublade,
- 11: Geschirrkorb,
- 12: Sockel,
- 13: Wandung,
- 14: bewegliche Wandung,

- 20: Wärmepumpe,
- 21: Verdichter oder Kompressor,
- 22: Fließrichtung,
- 23: Wärmepumpenmedium,
- 24: Verflüssiger oder Kondensator,
- 25: Expansionseinrichtung,
- 26: Verdampfer,
- 27: innerer Tank,
- 28: äußerer Tank,
- 29: erstes Einlaufventil,
- 30: Auslaufventil,
- 31: zweites Einlaufventil,
- 34: freier Auslauf,
- 35: Isolationslage,
- 36: Auslaufleitung,
- 37: Zuleitung,
- 38: Wasserhahn,
- 39: Flügelrad,
- 40: Enthärtungsanlage,
- 41: Heizpumpe,

- V: Vorderseite,
- Q: Querrichtung,
- B: Boden

## Patentansprüche

1. Haushaltsgeschirrspülmaschine (1) mit einem Spülbehälter (2) zur Aufnahme von Geschirr, Gläsern, Bestecken oder ähnlichem Spülgut, wobei dies Haushaltsgeschirrspülmaschine (1) mit zumindest einer während eines Teils eines Spülgangs betreibbaren Wärmepumpe (20) versehen ist, die einen Verflüssiger (24) und einen Verdampfer (26) in einem von Wärmepumpenmedium (23) durchflossenen Kreislauf umfasst, wobei dem Verdampfer (26) zumindest zwei im wesentlichen flache Tanks (27;28) zugeordnet sind, von denen zumindest ein innerer (27) entweder bei Befüllung mit Flüssigkeit als Wärmekoppler des äußeren Tanks (28) zum Spülbehälter (2) hin oder bei Befüllung mit Luft als thermischer Isolator zum Spülbehälter (2) hin verwendbar ist und wobei in dem zumindest einem äußeren Tank (28) Teile des Verdampfers (26) angeordnet sind,
wobei ein erstes Einlaufventil (29) zum gemeinsamen Befüllen von ein oder zwei äußeren Tanks (28) und ein Auslaufventil (30) zur Leitung einer im zumindest einen inneren Tank (27) enthaltenen Flüssigkeit in den Spülbehälter (2) vorgesehen sind, **dadurch gekennzeichnet, dass** ein zweites Einlaufventil (31) zum Befüllen oder Sperren des Zulaufs zu einem inneren Tank (27) vorgesehen ist.

2. Haushaltsgeschirrspülmaschine (1) nach Anspruch 1,
**dadurch gekennzeichnet,**
**dass** über das erste Einlaufventil (29) zwei äußere Tanks (28), die auf beiden Seiten des Spülbehälters (2) angeordnet sind, gleichzeitig befüllbar sind.

3. Haushaltsgeschirrspülmaschine (1) nach einem der Ansprüche 1 oder 2,
**dadurch gekennzeichnet,**
**dass** zumindest ein äußerer Tank (28) über einen Überlauf mit einem inneren Tank (27) in Verbindung steht.

4. Haushaltsgeschirrspülmaschine (1) nach einem der Ansprüche 1 bis 3,
**dadurch gekennzeichnet,**
**dass** der zumindest eine innere Tank (27) selektiv und unabhängig von einem oder mehreren äußeren Tanks (28) befüllbar ist.

5. Haushaltsgeschirrspülmaschine (1) nach einem der Ansprüche 1 bis 4,
**dadurch gekennzeichnet,**
**dass** der zumindest eine innere Tank (27) selektiv und unabhängig von einem oder mehreren äußeren Tanks (28) entleerbar ist.

6. Haushaltsgeschirrspülmaschine (1) nach einem der Ansprüche 1 bis 5,
**dadurch gekennzeichnet,**
**dass** der zumindest eine innere Tank (27) über einen freien Auslauf (34) von oben befüllbar ist.

7. Haushaltsgeschirrspülmaschine (1) nach Anspruch 6,
**dadurch gekennzeichnet,**
**dass** über den freien Auslauf (34) nach Art einer Dusche eine Mehrzahl von Wasserstrahlen von oben in den zumindest einen inneren Tank (27) einleitbar ist.

8. Haushaltsgeschirrspülmaschine (1) nach Anspruch 7,
**dadurch gekennzeichnet,**
**dass** über den freien Auslauf (34) auch ein Tank (27;28) mit ganz oder teilweise gefrorenem Inhalt von oben befüllbar ist.

9. Haushaltsgeschirrspülmaschine (1) nach einem der Ansprüche 1 bis 8,
**dadurch gekennzeichnet,**
**dass** die Wärmepumpe (20) in einem jeweiligen Spülgang während ihres Betriebs sämtliche Flüssigkeit, die zu Beginn ihres Betriebs in dem zumindest einen äußeren Tank (28) enthalten ist, bis zum Ende des Spülgangs dort behält.

10. Haushaltsgeschirrspülmaschine (1) nach Anspruch 9,
**dadurch gekennzeichnet,**
**dass** die Wärmepumpe (20) während eines Spülgangs zumindest zweimal ein- und ausschaltbar ist und ab dem ersten Einschalten sämtliche Flüssigkeit, die zu diesem Zeitpunkt im zumindest einen äußeren Tank (28) enthalten ist, bis zum Ende des Spülgangs dort behält.

11. Haushaltsgeschirrspülmaschine (1) nach Anspruch 9 oder 10,
**dadurch gekennzeichnet,**
**dass** die am Ende des Spülgangs in dem zumindest einen äußeren Tank (28) des Verdampfers (26) enthaltene Flüssigkeit zumindest teilweise in einem nächsten Spülgang als Teil der Spülflotte zu einem Vorspülen des Spülguts nutzbar und in den Spülbehälter (2) einleitbar ist.

12. Haushaltsgeschirrspülmaschine (1) nach Anspruch 11,
**dadurch gekennzeichnet,**
**dass** nach Verbrauch von Flüssigkeit aus den Tanks (27;28) zum Vorspülen der äußere Tank während dieses Spülgangs noch genau einmal mit Flüssigkeit befüllbar ist und diese Flüssigkeit dann bis zum Ende des Spülgangs hält.

13. Haushaltsgeschirrspülmaschine (1) nach einem der Ansprüche 1 bis 12,
**dadurch gekennzeichnet,**
**dass** die im äußeren (28) wie auch im inneren Tank (27) enthaltene Flüssigkeit zugeführtes Frischwasser nach Durchlauf durch einen Enthärter (40) ist.

14. Haushaltsgeschirrspülmaschine (1) nach einem der Ansprüche 1 bis 13,
**dadurch gekennzeichnet,**
**dass** zu Beginn des Spülgangs alle Tanks (27;28) mit Flüssigkeit befüllt sind, die im wesentlichen die Umgebungstemperatur aufweist.

15. Haushaltsgeschirrspülmaschine (1) nach einem der Ansprüche 1 bis 14,
**dadurch gekennzeichnet,**
**dass** der Betrieb der Wärmepumpe (20) während eines Aufheizens innerhalb einer Waschphase des Spülgangs startet.

16. Haushaltsgeschirrspülmaschine (1) nach einem der Ansprüche 1 bis 15,
**dadurch gekennzeichnet,**
**dass** die Tanks (27;28) außerhalb von einer oder mehreren seitlichen Wandungen (13) des Spülbehälters (2) angeordnet sind.

17. Haushaltsgeschirrspülmaschine (1) nach einem der Ansprüche 1 bis 16,
**dadurch gekennzeichnet,**
**dass** der Verdampfer (26) rohrförmig im jeweils äußeren Tank (28) angeordnet ist.

18. Haushaltsgeschirrspülmaschine (1) nach einem der Ansprüche 1 bis 17,
**dadurch gekennzeichnet,**
**dass** die Abläufe zu Befüllen und Entleeren der Tanks (27;28) in einem Steuerprogramm hinterlegt sind.

19. Haushaltsgeschirrspülmaschine (1) nach einem der Ansprüche 1 bis 18,
**dadurch gekennzeichnet,**
**dass** die Wärmepumpe (20) in zumindest zwei Phasen eines Spülgangs zur Unterstützung einer Erwärmung aktiv ist.

20. Haushaltsgeschirrspülmaschine (1) nach einem der Ansprüche 1 bis 19,
**dadurch gekennzeichnet,**
**dass** der oder die innere(n) Tank(s) ein Fassungsvermögen von ca. einem Liter und der oder die äußere(n) Tank(s) ein Fassungsvermögen von ca. vier Litern aufweist oder aufweisen.

## Claims

1. Household dishwasher (1) with a dishwasher cavity (2) for receiving dishes, glasses, cutlery or similar items to be washed, wherein this household dishwasher (1) is provided with at least one heat pump (20) which can be operated during part of a wash cycle, said heat pump comprising a condenser (24) and an evaporator (26) in a circuit through which heat pump medium (23) flows, wherein at least two substantially flat tanks (27; 28) are assigned to the evaporator (26), of which at least one inner tank (27) can be used either as a heat coupler of the outer tank (28) toward the dishwasher cavity (2) when filled with liquid or as a thermal isolator toward the dishwasher cavity (2) when filled with air and wherein parts of the evaporator (26) are arranged in the at least one outer tank (28),
wherein provision is made for a first inlet valve (29) for jointly filling one or two outer tanks (28) and for an outlet valve (30) for conducting a liquid contained in the at least one inner tank (27) into the dishwasher cavity (2), **characterised in that** a second inlet valve (31) is provided for filling or blocking the supply to an inner tank (27).

2. Household dishwasher (1) according to claim 1,
**characterised in that**
two outer tanks (28), which are arranged on both sides of the dishwasher cavity (2), can be filled at the same time by way of the first inlet valve (29).

3. Household dishwasher (1) according to one of claims 1 or 2,
**characterised in that**
at least one outer tank (28) is connected to an inner tank (27) by way of an overflow.

4. Household dishwasher (1) according to one of claims 1 to 3,
**characterised in that**
the at least one inner tank (27) can be filled selectively and independently of one or more outer tanks (28).

5. Household dishwasher (1) according to one of claims 1 to 4,
**characterised in that**
the at least one inner tank (27) can be emptied selectively and independently of one or more outer tanks (28).

6. Household dishwasher (1) according to one of claims 1 to 5,
**characterised in that**
the at least one inner tank (27) can be filled from above by way of a free outlet (34).

7. Household dishwasher (1) according to claim 6,
**characterised in that**
a plurality of water jets can be introduced from above into the at least one inner tank (27) by way of the free outlet (34) in the manner of a shower.

8. Household dishwasher (1) according to claim 7,
**characterised in that**
a tank (27; 28) can also be filled from above with entirely or partially frozen content by way of the free outlet (34).

9. Household dishwasher (1) according to one of claims 1 to 8,
**characterised in that**
during its operation in a respective wash cycle the heat pump (20) holds all liquid, which is contained in the at least one outer tank (28) at the start of its operation, until the end of the wash cycle.

10. Household dishwasher (1) according to claim 9,
**characterised in that**
the heat pump (20) can be switched on and off at least twice during a wash cycle and after the first switch-on process holds all liquid, which is contained in the at least one outer tank (28) at this point in time, until the end of the wash cycle.

11. Household dishwasher (1) according to claim 9 or 10,
**characterised in that**
the liquid contained in the at least one outer tank (28) of the evaporator (26) at the end of the wash cycle can be used at least partially in a next wash cycle as part of the washing liquor for prerinsing the item to be washed and can be introduced into the dishwasher cavity (2).

12. Household dishwasher (1) according to claim 11,
**characterised in that**
after liquid from the tank (27, 28) has been used for prerinsing purposes, the outer tank can be filled just once with liquid during this wash cycle and then holds this liquid until the end of the wash cycle.

13. Household dishwasher (1) according to one of claims 1 to 12,
**characterised in that**
the liquid contained in the outer tank (28) and also in the inner tank (27) is fresh water supplied after passing through a softener (40).

14. Household dishwasher (1) according to one of claims 1 to 13,
**characterised in that**
at the start of the wash cycle all tanks (27; 28) are filled with liquid which has essentially the ambient temperature.

15. Household dishwasher (1) according to one of claims 1 to 14,
**characterised in that**
the operation of the heat pump (20) starts during a heating-up process within a washing phase of the wash cycle.

16. Household dishwasher (1) according to one of claims 1 to 15,
**characterised in that**
the tanks (27; 28) are arranged outside of one or more lateral walls (13) of the dishwasher cavity (2).

17. Household dishwasher (1) according to one of claims 1 to 16,
**characterised in that**
the evaporator (26) is arranged in the shape of a tube in the respective outer tank (28).

18. Household dishwasher (1) according to one of claims 1 to 17,
**characterised in that**
the processes for filling and emptying the tanks (27; 28) are stored in a control program.

19. Household dishwasher (1) according to one of claims 1 to 18,
**characterised in that**
the heat pump (20) is active in at least two phases of a wash cycle for assisting with a heating process.

20. Household dishwasher (1) according to one of claims 1 to 19,
**characterised in that**
the inner tank or tanks has/have a capacity of approx. one litre and the outer tank or tanks has/have a capacity of approx. four litres.

## Revendications

1. Lave-vaisselle domestique (1) comprenant une cuve de lavage (2) pour recevoir de la vaisselle, des verres, des couverts ou des articles à laver semblables, dans lequel le lave-vaisselle domestique (1) est pourvu d'au moins une pompe à chaleur (20) pouvant fonctionner pendant au moins une partie d'un cycle de lavage, qui comprend un condenseur (24) et un évaporateur (26) dans un circuit parcouru par un fluide de pompe à chaleur (23),
dans lequel au moins deux réservoirs essentiellement plats (27, 28) sont associés à l'évaporateur (26), parmi lesquels au moins un réservoir intérieur (27) peut être utilisé, en cas de remplissage avec du liquide, à titre de coupleur de chaleur du réservoir extérieur (28) pour la cuve de lavage (2) ou, en cas de remplissage avec de l'air, à titre d'isolant thermique pour la cuve de lavage (2), et
dans lequel des parties de l'évaporateur (26) sont disposées dans l'au moins un réservoir extérieur (28),
dans lequel une première soupape d'admission (29) est prévue pour un remplissage commun d'un ou deux réservoirs extérieurs (28) et une soupape de décharge (30) est prévue pour diriger un liquide contenu dans au moins un réservoir intérieur (27) dans la cuve de lavage (2),
**caractérisé en ce qu'**une deuxième soupape d'admission (31) est prévue pour un remplissage d'un réservoir intérieur (27) ou une fermeture d'un afflux à celui-ci.

2. Lave-vaisselle domestique (1) selon la revendication 1,
**caractérisé en ce que** deux réservoirs extérieurs (28), disposés des deux côtés de la cuve de lavage (2) peuvent être remplis simultanément via la première soupape d'admission (29).

3. Lave-vaisselle domestique (1) selon l'une des revendications 1 ou 2,
**caractérisé en ce qu'**au moins un réservoir extérieur (28) est en communication avec un réservoir intérieur (27) via un trop-plein.

4. Lave-vaisselle domestique (1) selon l'une des revendications 1 à 3,
**caractérisé en ce que** l'au moins un réservoir intérieur (27) peut être rempli sélectivement et indépendamment d'un autre ou plusieurs réservoirs extérieurs (28).

5. Lave-vaisselle domestique (1) selon l'une des revendications 1 à 4,
**caractérisé en ce que** l'au moins un réservoir intérieur (27) peut être vidé sélectivement et indépendamment d'un autre ou plusieurs réservoirs extérieurs (28).

6. Lave-vaisselle domestique (1) selon l'une des revendications 1 à 5,
**caractérisé en ce que** l'au moins un réservoir intérieur (27) peut être rempli par le haut via un orifice de décharge libre (34).

7. Lave-vaisselle domestique (1) selon la revendication 6,
**caractérisé en ce qu'**une pluralité de jets d'eau peut être introduite par le haut dans l'au moins un réservoir intérieur (27) via l'orifice de décharge libre (34) à la manière d'une douche.

8. Lave-vaisselle domestique (1) selon la revendication 7,
**caractérisé en ce qu'**un réservoir (27, 28) ayant un contenu entièrement ou partiellement gelé peut aussi être rempli par le haut via l'orifice de décharge libre (34).

9. Lave-vaisselle domestique (1) selon l'une des revendications 1 à 8,
**caractérisé en ce que** la pompe à chaleur (20), conserve, dans un cycle de lavage respectif, durant son fonctionnement, tout le liquide qui est contenu au début de son fonctionnement dans l'au moins un réservoir extérieur (28) jusqu'à la fin du cycle de lavage.

10. Lave-vaisselle domestique (1) selon la revendication 9,
**caractérisé en ce que** la pompe à chaleur (20) peut être activée et désactivée au moins deux fois pendant un cycle de lavage et à partir de la première activation, tout le liquide qui est contenu à cet instant dans au moins un réservoir extérieur (28) y reste jusqu'à la fin du cycle de lavage.

11. Lave-vaisselle domestique (1) selon la revendication 9 ou 10,
**caractérisé en ce qu'**à la fin du cycle de lavage, le liquide contenu dans l'au moins un réservoir extérieur (28) de l'évaporateur (26) peut être utilisé au moins en partie dans un prochain cycle de lavage en tant que partie de l'eau de lavage pour un prélavage des articles à laver et peut être introduit dans la cuve de lavage (2).

12. Lave-vaisselle domestique (1) selon la revendication 11,
**caractérisé en ce qu'**après la consommation du liquide provenant des réservoirs (27, 28) pour un prélavage, le réservoir extérieur durant ce cycle de lavage peut encore être rempli une seule fois avec du liquide et conserve ce liquide ensuite jusqu'à la fin du cycle de lavage.

13. Lave-vaisselle domestique (1) selon l'une des revendications 1 à 12,
**caractérisé en ce que** le liquide contenu dans le réservoir extérieur (28) ainsi que le réservoir intérieur (27) est de l'eau fraîche introduite après un passage à travers un adoucisseur (40).

14. Lave-vaisselle domestique (1) selon l'une des revendications 1 à 13,
**caractérisé en ce qu'**au début du cycle de lavage, tous les réservoirs (27, 28) sont remplis avec du liquide, qui est essentiellement à une température ambiante.

15. Lave-vaisselle domestique (1) selon l'une des revendications 1 à 14,
**caractérisé en ce que** l'activation de la pompe à chaleur (20) débute pendant un chauffage dans une phase de lavage du cycle de lavage.

16. Lave-vaisselle domestique (1) selon l'une des revendications 1 à 15,
**caractérisé en ce que** les réservoirs (27, 28) sont disposés à l'extérieur d'une ou plusieurs parois latérales (13) de la cuve de lavage (2).

17. Lave-vaisselle domestique (1) selon l'une des revendications 1 à 16,
**caractérisé en ce que** l'évaporateur (26) est agencé dans une forme tubulaire dans le réservoir extérieur respectif (28).

18. Lave-vaisselle domestique (1) selon l'une des revendications 1 à 17,
**caractérisé en ce que** les opérations de remplissage et de vidage des réservoirs (27, 28) sont enregistrées dans un programme de commande.

19. Lave-vaisselle domestique (1) selon l'une des revendications 1 à 18,
**caractérisé en ce que** la pompe à chaleur (20) est active dans au moins deux phases d'un cycle de lavage pour renforcer un chauffage.

20. Lave-vaisselle domestique (1) selon l'une des revendications 1 à 19,
**caractérisé en ce que** le ou les réservoir(s) intérieur(s) a(ont) une contenance d'environ un litre et le ou les réservoir(s) extérieur(s) a(ont) une contenance d'environ quatre litres.
